**Europäisches Patentamt**

**European Patent Office**

**Office européen des brevets**

(19)

(11) Numéro de publication : **0 340 119 B1**

# FASCICULE DE BREVET EUROPEEN

(12)

(45) Date de publication du fascicule du brevet :
**27.05.92 Bulletin 92/22**

(51) Int. Cl.$^5$ : **C01G 25/04**, C01G 27/04

(21) Numéro de dépôt : **89420114.4**

(22) Date de dépôt : **29.03.89**

(54) **Procédé et dispositif d'introduction de tétrachlorure de zirconium, de tétrachlorure de hafnium et de leurs mélanges dans unecolonne de distillation extractive en continu et sous pression desdits chlorures.**

(30) Priorité : **31.03.88 FR 8804731**

(43) Date de publication de la demande :
**02.11.89 Bulletin 89/44**

(45) Mention de la délivrance du brevet :
**27.05.92 Bulletin 92/22**

(84) Etats contractants désignés :
**DE ES GB SE**

(56) Documents cités :
**EP-A- 0 123 634**
**US-A- 3 098 722**

(73) Titulaire : **CEZUS Compagnie Européenne du Zirconium**
**Tour Manhattan - La Défense 2 6, Place de l'Iris**
**F-92400 Courbevoie (FR)**

(72) Inventeur : **Brun, Pierre**
**8, boulevard Maréchal Leclerc**
**F-38000 Grenoble (FR)**
Inventeur : **Guerin, Jean**
**88, rue Maurin des Maures**
**F-83600 Frejus (FR)**

(74) Mandataire : **Vanlaer, Marcel et al**
**PECHINEY 28, rue de Bonnel**
**F-69433 Lyon Cédex 3 (FR)**

## Description

Le procédé et le dispositif de l'invention concernent l'introduction continue, avec un débit stable et connu, de tétrachlorure de zirconium, de tétrachlorure de hafnium et de leurs mélanges dans une colonne de distillation extractive en continu et sous pression desdits chlorures.

Le principe de l'alimentation d'une colonne de distillation extractive des tétrachlorures de zirconium et de hafnium en vapeurs de "tétrachlorure de zirconium brut hafnié" résultant d'une sublimation est connu par le brevet FR-C-2250707. Mais l'expérience a montré que l'introduction continue de telles vapeurs, sous une "pression" comprise entre 0,0005 et 0,15 MPa et avec un débit stable et suffisamment bien connu, était particulièrement difficile à réaliser.

Il convient de noter que, dans ce texte, et comme il est usuel pour des pressions internes, le terme "pression" désigne la surpression par rapport à la pression atmosphérique.

Il est en effet connu d'introduire lesdits chlorures dans une capacité au moyen d'une vis éventuellement vibrée. Si cette capacité est sous pression, il se produit par la vis des remontées de gaz ou de vapeur sublimée provenant de la poudre introduite. Si la phase gazeuse ne se condense pas dans la vis, sa remontée par la vis gêne ou empêche l'écoulement de la poudre, selon l'importance de la pression de cette phase gazeuse. Si la phase gazeuse se condense, il se forme dans la vis une pâte qui tend à l'obstruer. Dans le cas du tétrachlorure de zirconium, $ZrCl_4$, qui se sublime à 335°C environ à la pression atmosphérique, son envoi par vis vibrée ou non dans un sublimateur à 335°C entraîne des remontées de vapeurs sublimées de $ZrCl_4$ qui se condensent dans la vis et la bouchent.

Pour pallier de tels inconvénients, diverses modifications de ce procédé d'introduction ont été essayées tendant soit à équilibrer les pressions des deux côtés de la vis d'introduction, par exemple en fermant la trémie d'alimentation de la vis en poudre et en injectant de ce côté de la vis un petit débit de gaz neutre, soit à combattre les remontées de phase gazeuse sous pression dans la vis, par exemple en injectant un gaz neutre tel que l'azote dans la capacité sous pression sur l'extrémité de la vis de façon à produire un matelas de gaz inerte. Cette deuxième modification, appropriée à une alimentation en continu, n'empêche pas complètement les remontées de phase gazeuse et les condensations dans le cas de $ZrCl_4$; il est alors nécessaire de les empêcher plus complètement par des modifications supplémentaires, par exemple en rajoutant un moyen de chauffage de la tubulure à la sortie de la vis ou au contraire en refroidissant cette tubulure et en râclant les croûtes de $ZrCl_4$ condensé au début de leur formation, ce qui pose des problèmes mécaniques délicats.

Mais ces modifications n'apportent pas de solution valable dans le cas où la capacité est une colonne de distillation extractive en continu et sous pression. En effet :

– l'injection de gaz inerte perturbe le fonctionnement de la colonne

– le débit de vapeurs de chlorures ne peut pas être réglé avec une précision supérieure à 1% relatif

– de l'air peut être introduit dans la capacité avec les grains de chlorure et l'oxygène contenu est alors source de corrosion du matériau de la colonne.

Mais ce sont surtout les variations et l'imprécision de réglage du débit de chlorures vaporisés introduits dans la colonne qui constituent l'inconvénient majeur des procédés de l'art antérieur.

C'est pourquoi, la demanderesse a cherché un moyen d'introduction notamment de tétrachlorure de zirconium hafnié dans une colonne de distillation extractive de tétrachlorure de hafnium, qui soit plus précis et plus fiable, dans lequel on ne fait pas d'ajout de gaz neutre, même en quantité faible et qui puisse fonctionner sous une différence de pression comprise entre une valeur faible, par exemple 0,0005 MPa, et au plus 0,15 MPa, étant entendu que cette différence de pression est celle qui existe entre le sublimateur et la colonne d'une part et l'atmosphère d'autre part.

S'inspirant du fait que les chlorures de zirconium, le chlorure de hafnium et leurs mélanges sont solubles dans certains sels fondus, comme cela est décrit par le brevet français FR-C-2250707, la demanderesse a eu l'idée d'utiliser de tels solvants dans le procédé de l'invention et notamment, le solvant complexe chloroaluminate de potassium, $KAlCl_4$ ou $(KCl, AlCl_3)$.

En effet, des essais ont montré que ce solvant complexe est très peu volatil : sa tension de vapeur en KCl est presque nulle, sa tension de vapeur en $AlCl_3$ est faible, et ces tensions de vapeurs nulles ou faibles ne sont pas gênantes dans le procédé de distillation extractive du brevet FR-C-2250707. Ce solvant dissout à 335°C, température de sublimation de $ZrCl_4$ à la pression atmosphérique, une quantité de $ZrCl_4$ supérieure à 40 g pour 100 g de solvant, et lorsqu'on réchauffe la solution obtenue à 500°C environ, plus de 90 % de $ZrCl_4$ qui y est dissous s'en échappe sous forme de vapeur. Une telle solution contenant 40 g de $ZrCl_4$ dans 100 g de chloroaluminate de potassium est homogène et donc pompable entre 300 et 350°C environ. Son débit est alors mesurable et réglable en continu.

Cependant, d'après le brevet FR-C-2250707, d'autres solvants complexes peuvent être utilisés car ils présentent comme $KAlCl_4$ des différences importantes de solubilité des tétrachlorures de zirconium et de hafnium avec la température et la pression et permettent de récupérer le $ZrCl_4$ et le $HfCl_4$ dissous. Ce

sont : $NaAlCl_4$, $KFeCl_4$ et $NaFeCl_4$. Toutefois, ceux qui contiennent du potassium se sont révélés, de façon inattendue, plus favorable que ceux contenant du sodium du point de vue de la solubilité totale des chlorures de Zr et de Hf, de leur volatilité relative et de leur stabilité, car ils conduisent à une bonne régularité de marche de l'installation de distillation et à la constance de qualité du titre du chlorure de zirconium hafnié.

L'objet de l'invention est ainsi un procédé d'introduction de tétrachlorure de zirconium, de tétrachlorure de hafnium et de leurs mélanges dans une colonne de distillation extractive en continu sous pression utilisant la mise en solution desdits chlorures dans un solvant liquide, dans lequel la tension de vapeur et la solubilité desdits chlorures varient de façon importante avec la température et la pression, ce procédé comprenant au moins les étapes suivantes :

a1) Dissolution desdits chlorures dans le solvant liquide à pression atmosphérique et à la température $\theta_1$ pour obtenir une solution de concentration donnée, c'est-à-dire calculable et réglable;

b1) transfert de cette solution éventuellement avec stockage intermédiaire dans un bac de réserve;

c1) mise sous pression et réglage du débit de cette solution à des valeurs constantes par des moyens connus, par exemple par utilisation d'une pompe doseuse, ou par utilisation d'une pompe centrifuge complétée par un débitmètre et un régulateur de débit;

d1) introduction de cette solution mise sous pression et à débit constant dans un évaporateur relié à ladite colonne, ledit évaporateur étant à la pression de la colonne;

e1) réchauffage de la solution dans cet appareil à une température choisie $\theta_2$ supérieure à $\theta_1$ et suffisante pour sublimer l'essentiel desdits chlorures contenus dans la solution, les vapeurs sublimées passant alors avec un débit stable et connu dans ladite colonne.

Dans cette dernière étape, la solution appauvrie en chlorures sublimables est de préférence recyclée dans la ou les dissolutions suivantes (étape a1), éventuellement par l'intermédiaire d'un bac tampon.

Le solvant utilisé est l'un des quatre solvants complexes présentés dans le brevet FR-C-2250707 et cités dans la présente description. On a vu que, d'après ce brevet, les solvants les plus favorables sont $KAlCl_4$ et $KFeCl_4$, et on a trouvé qu'il était en pratique préférable d'utiliser le chloroaluminate $KAlCl_4$, plus stable que le chloroferrate. Le rendement de sublimation par réchauffage de la solution entre 430 et 550°C, de préférence entre 450 et 500°C, est alors supérieur à 70% et typiquement compris entre 80 et 95% pour une pression dans l'évaporateur où est fait ce préchauffage, comprise entre 0,0005 et 0,15 MPa.

Grâce à une concentration et un débit de solution stables et à une température de réchauffage stable, on arrive aisément à obtenir un débit de vapeurs de $ZrCl_4$ hafnié dans la colonne sous pression stable et connu à mieux que 1% près.

L'exemple et le schéma qui suivent, donnés à titre d'illustration non limitative, permettront de mieux comprendre la mise en oeuvre du procédé de l'invention.

L'exemple donné concerne l'introduction de $ZrCl_4$ hafnié dans une colonne de distillation extractive en continu de tétrachlorures de zirconium et de hafnium selon le procédé du brevet FR-C-2250707.

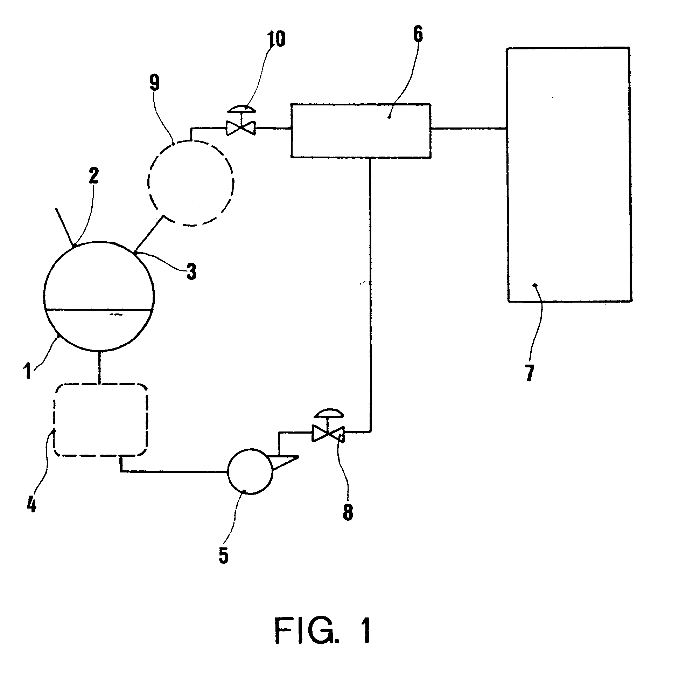

La figure 1 représente schématiquement le dispositif d'introduction du $ZrCl_4$ hafnié dans une telle colonne.

Le dissoluteur 1 schématisé est un récipient muni d'un moyen de chauffage. On y introduit, par exemple par un ou deux orifices 2 du couvercle, 400 kg de $ZrCl_4$ hafnié solide en poudre, puis 1000 kg de $KAlCl_4$ liquide à température comprise entre 250 et 350°C pour faire une première dissolution. Lors des dissolutions suivantes, la solution appauvrie en $ZrCl_4$ hafnié, c'est-à-dire du solvant contenant par exemple 2 à 10 g de $ZrCl_4$ hafnié par 100 g de solvant, peut être recyclée par un orifice 3, la bonne connaissance de sa concentration en $ZrCl_4$ hafnié permettant d'ajuster les quantités de tétrachlorure en poudre et de solvant pour obtenir une solution à titre à peu près constant. Après fermeture des orifices 2 et 3, on réchauffe le récipient 1 pour favoriser la dissolution du $ZrCl_4$ hafnié, et on obtient une solution à 40 g de $ZrCl_4$ hafnié pour 100 g de solvant à une température $\theta_1$ comprise entre 280 et 350°C. Cette solution de titre connu à mieux que 1% près peut être éventuellement filtrée pour la débarrasser des impuretés solides qui pourraient perturber le fonctionnement de la pompe 5 et du débitmètre (voir plus loin). La solution est de préférence stockée dans un bac de réserve 4 où elle est éventuellement réchauffée à température déterminée, d'où se fait l'alimentation en continu de la suite 5, 6 du dispositif et de la colonne 7.

La solution est ensuite reprise par une pompe 5 qui permet de la refouler dans un évaporateur 6 qui est relié par une tubulure à la colonne de distillation extractive 7 et est à la même pression. Le refoulement correct d'un liquide dans un appareil sous pression pouvant aller jusqu'à 0,15 MPa est obtenu avec une pompe doseuse ou avec une pompe centrifuge, d'un type utilisable entre 280 et 350°C avec des thermofluides ou des sels fondus. Le débit de la solution doit être mesuré et réglé avec une précision meilleure que 1% relatif pour assurer une alimentation correcte et un bon fonctionnement de la colonne 7. Pour cela, dans le cas d'une pompe centrifuge, on ajoute à la sortie de la pompe un débitmètre et un régulateur de débit 8.

L'évaporateur 6 apporte les calories nécessaires au réchauffage de la solution qui y est refoulée à une température telle que l'évaporation de $ZrCl_4$ hafnié soit presque totale : entre 430 et 550°C, au moins 70% du $ZrCl_4$ hafnié dissous est évaporé, et plus typiquement, entre 450 et 500°C, 80 à 95% du $ZrCl_4$ est évaporé pour une pression dans l'évaporateur et dans la colonne comprise entre 0,0005 et 0,15 MPa. Si la température est stable ainsi que la pression, le débit de vapeur de $ZrCl_4$ hafnié dans la colonne 7 est stable et comu à mieux que 1% près.

La solution appauvrie, contenant par exemple environ 4 g de $ZrCl_4$ hafnié pour 100 g de solvant si le rendement d'évaporation ou de sublimation du $ZrCl_4$ hafnié dissous est de 90%, s'écoule de l'évaporateur soit par débordement, soit par régulation de niveau, et elle est de préférence, par mesure d'économie, recyclée. Cette solution appauvrie est alors dirigée, après refroidissement éventuel jusqu'à 330°C environ, dans un bac tampon 9 d'où elle est reprise pour la ou les dissolutions suivantes, la solution appauvrie étant alors introduite en quantité connue dans le dissoluteur par une tubulure conduisant à l'orifice 3. Si l'écoulement de la solution appauvrie se fait par débordement, un clapet taré 10, ou une garde hydraulique du type siphon, est nécessaire pour éviter une baisse de pression dans l'évaporateur 6 et dans la colonne en aval 7.

De façon générale, le procédé de l'invention peut s'appliquer aussi bien à l'alimentation de colonnes en dépression qu'à l'alimentation de colonnes en surpression.

On a indiqué que le solvant liquide dans lequel la tension de vapeur et la solubilité du $ZrCl_4$ hafnié varient de façon importante avec la température et la pression, est de préférence du chloroaluminate de potassium $KAlCl_4$ ou $(KCl,AlCl_3)$. L'intervalle de concentration utilisable en pratique est alors : 25 à 55 g de $ZrCl_4$ brut pour 100 g de ce solvant, la concentration préférentielle est de 35 à 45 g de $ZrCl_4$ pour 100 g de ce solvant. Le procédé permet d'introduire dans la colonne 7 de distillation extractive de $ZrCl_4$ et de $HfCl_4$, des vapeurs de produit brut ($ZrCl_4$, $HfCl_4$) pur sans mélange de gaz inerte, avec un débit stable et connu.

Le procédé de l'invention est également applicable à $HfCl_4$, avec le même solvant, les mêmes ordres de grandeur de concentration.

L'invention concerne aussi un dispositif d'introduction de tétrachlorure de zirconium, de tétrachlorure de hafnium et de leurs mélanges dans une colonne de distillation extractive en continu sous pression, ce dispositif comprenant au moins :

a2) un dissoluteur à chaud 1, pourvu de moyens d'alimentation : en chlorures 2, en solvant liquide 2, éventuellement en solvant recyclé 3;

b2) des moyens de refoulement sous pression 5 de la solution chaude obtenue et de contrôle de son débit 5,8;

c2) un évaporateur 6 muni d'une alimentation en solution refoulée par la pompe 5, relié par une tubulure à la colonne 7 et muni d'un écoulement pour la solution appauvrie;

d2) un moyen 10 associé à cet écoulement permettant d'éviter la baisse de pression de l'appareil de réchauffage 6 et de la colonne 7 située en aval, par exemple un clapet taré ou une garde hydraulique.

Le procédé de l'invention s'applique en particulier dans les unités de fabrication de $ZrCl_4$ de pureté nucléaire et de $HfCl_4$.

## Revendications

1. Procédé d'introduction, avec un débit stable et connu, de tétrachlorure de zirconium, de tétrachlorure de hafnium et de leurs mélanges dans une colonne de distillation extractive en continu et sous pression utilisant la mise en solution desdits chlorures dans un solvant liquide, dans lequel la tension de vapeur et la solubilité desdits chlorures varient de façon importante avec la température et la pression, caractérisé en ce que le procédé comprend au moins les étapes suivantes :

a1) dissolution desdits chlorures dans le solvant liquide à pression atmosphérique et à une température choisie $\theta_1$, pour obtenir une solution de concentration donnée;

b1) transfert de cette solution;

c1) mise sous pression et réglage du débit de cette solution à des valeurs constantes;

d1) introduction de cette solution mise sous pression et de débit constant dans un évaporateur (6) relié à ladite colonne (7), ledit évaporateur étant à la pression de la colonne;

e1) réchauffage de la solution dans cet appareil à une température choisie $\theta_2$ supérieure à $\theta_1$ et suffisante pour sublimer l'essentiel desdits chlorures contenus dans la solution.

2. Procédé selon la revendication 1, dans lequel la solution appauvrie en chlorures sublimables est ensuite recyclée dans la ou les dissolutions suivantes correspondant à l'étape a1.

3. Procédé selon l'une quelconque des revendications 1 ou 2, caractérisé en ce que la surpression par rapport à la pression atmosphérique, commune à l'évaporateur et à la colonne est comprise entre 0,0005 et 0,15 MPa.

4. Procédé selon l'une quelconque des revendications 2 ou 3, caractérisé en ce que l'étape b1 comprend un stockage intermédiaire de la solution dans un bac de réserve, permettant une alimentation en continu de la suite du dispositif et de la colonne, et en ce que le recyclage du solvant comprend son stockage intermédiaire dans un bac tampon d'où il est repris pour la ou les dissolutions suivantes.

5. Procédé selon l'une quelconque des revendications 1 à 4, caractérisé en ce que le solvant est du chloroaluminate de potassium ($KAlCl_4$).

6. Procédé selon la revendication 5, caractérisé en ce que la température de dissolution $\theta_1$ est comprise entre 280 et 350°C, et en ce que la température de réchauffage pour sublimation $\theta_2$ est comprise entre 430 et 550°C.

7. Procédé selon la revendication 6, caracctérisé en ce que la concentration de tétrachlorure de zirconium hafnié dissous est de 25 à 55 g par 100 g de solvant.

8. Dispositif d'introduction de chlorure de zirconium, de chlorure d'hafnium et de leurs mélanges dans une colonne de distillation extractive en continu et sous pression, caractérisé en ce qu'il comprend au moins:

a2) un dissoluteur à chaud (1) pourvu de moyens d'alimentation : en chlorures (2), en solvant liquide (2), éventuellement en solvant recyclé (3);

b2) des moyens de refoulement sous pression (5) de la solution chaude obtenue et de contrôle de son débit (5,8);

c2) un évaporateur (6), muni d'une alimentation en solution refoulée par le moyen (5), relié par une tubulure à ladite colonne (7), et muni d'un écoulement pour la solution appauvrie;

d2) un moyen (10) associé à cet écoulement permettant d'éviter la baisse de pression de l'appareil de réchauffage (6) et de la colonne (7) située en aval.

9. Dispositif selon la revendication 8, caractérisé en ce que le moyen (10) appartient au groupe constitué par les clapets tarés et les gardes hydrauliques.

**Patentansprüche**

1. Verfahren zur kontinuierlichen Zufuhr von Zirkoniumtetrachlorid, Hafniumtetrachlorid und ihren Gemischen mit stabilem und bekanntem Eintrag in eine extraktive Destillationskolonne unter Druck, wobei ausgenutzt wird, daß diese Chloride in einem flüssigen Lösungsmittel in Lösung gehen, in dem der Dampfdruck und die Löslichkeit dieser Chloride mit der Temperatur und dem Druck stark variieren, dadurch gekennzeichnet, daß das Verfahren mindestens die folgenden Stufen umfaßt:

a1) Auflösen dieser Chloride im flüssigen Lösungsmittel bei Atmosphärendruck bei einer gewählten Temperatur $\theta_1$, um eine Lösung gegebener Konzentration zu erhalten;

b1) Transfer dieser Lösung;

c1) Anlegen eines Drucks und Einstellen des Austrags der Lösung auf konstante Werte;

d1) Zufuhr dieser unter Druck gesetzten Lösung mit konstantem Austrag in einen an die Kolonne angeschlossenen Evaporator, der unter dem gleichen Druck steht wie die Kolonne;

e1) Erwärmen der Lösung in diesem Apparat auf eine gewählte Temperatur $\theta_2$, die höher ist als $\theta_1$ und zur Sublimation eines wesentlichen Teils der in der Lösung enthaltenen Chloride ausreicht.

2. Verfahren nach Anspruch 1, worin die an sublimierbaren Chloriden verarmte Lösung anschließend zu der oder den folgenden der Stufe a1 entsprechenden Lösungen zurückgeführt wird.

3. Verfahren nach einem der Ansprüche 1 oder 2, dadurch gekennzeichnet, daß der Überdruck des Evaporators und der Kolonne, bezogen auf den Atmosphärendruck, zwischen 0,0005 und 0,15 MPa liegt.

4. Verfahren nach einem der Ansprüche 2 oder 3, dadurch gekennzeichnet, daß die Stufe b1 eine Zwischenlagerung der Lösung in einem Reservetank umfaßt, der in Folge der Elemente der Vorrichtung die kontinuierliche Versorgung der Einrichtung und der Kolonne erlaubt, und daß die Rückführung des Lösungsmittels seine Zwischenlagerung in einem Puffertank umfaßt, aus dem es für den/die folgende(n) Auflösungsvorgang(Vorgänge) entnommen wird.

5. Verfahren nach einem der Ansprüche 1-4, dadurch gekennzeichnet, daß das Lösungsmittel Kaliumchloraluminat ($KAlCl_4$) ist.

6. Verfahren nach Anspruch 5, dadurch gekennzeichnet, daß die Auflösungstemperature $\theta_1$ zwischen 280 und 350 °C liegt und daß die Erwärmungstemperatur für die Sublimation $\theta_2$ zwischen 430 und 550 °C liegt.

7. Verfahren nach Anspruch 6, dadurch gekennzeichnet, daß die Konzentration an aufgelöstem hafniumhaltigen Zirkoniumtetrachlorid 25 bis 55 g auf 100 g Lösungsmittel beträgt.

8. Einrichtung zur kontinuierlichen Zufuhr von Zirkoniumchlorid, Hafniumchlorid und ihren Gemischen in eine extraktive Destillationskolonne unter Druck, dadurch gekennzeichnet, daß es mindestens umfaßt:

a2) einen Behälter zur Auflösung in der Wärme (1), der mit Vorrichtungen zur Versorgung an Chloriden (2), an flüssigem Lösungsmittel (2), eventuell an rückgeführtem Lösungsmittel (3) versehen ist;

b2) Vorrichtungen zur Stauung unter Druck (5) der erhaltenen warmen Lösung und zur Kontrolle ihres Austrags (5, 8);

c2) einen Evaporator (6), der mit einer Einrichtung zur Versorgung der durch die Vorrichtung (5) gestauten Lösung versehen, über ein kurzes Rohr mit der Kolonne (7) verbunden und mit einer Abflußvorrichtung für die verarmte Lösung versehen ist;

d2) eine Vorrichtung (10), die an diese Abflußvorrichtung angeschlossen ist und den Druckabfall des Erwärmungsapparates (6) und der nachgeschalteten Kolonne (7) zu vermeiden erlaubt.

9. Einrichtung nach Anspruch 8, dadurch gekennzeichnet, daß die Vorrichtung (10) den geeichten Ventilen und hydraulischen Sicherheitsvorlagen angehört.

## Claims

1. Process for introducing zirconium tetrachloride, hafnium tetrachloride and mixtures thereof at a stable, known flow rate into a column for continuous extractive distillation under pressure, using the dissolution of said chlorides in a liquid solvent in which the vapour tension and solubility of said chlorides vary significantly with the temperature and the pressure, characterised in that the process comprises at least the following stages:

a1) dissolution of said chlorides in the liquid solvent at atmospheric pressure and at a selected temperature $\theta_1$ to produce a solution of given concentration;

b1) transfer of this solutions;

c1) compression and control of the flow rate of this solution to constant values;

d1) introduction of this compressed solution having a constant flow rate into an evaporator connected to said column, said evaporator being at the pressure of the column;

e1) reheating of the solution in this apparatus to a selected temperature $\theta_2$ higher than $\theta_1$ and sufficient to sublime the majority of said chlorides contained in the solution.

2. Process according to claim 1, in which the solution which is impoverished in sublimable chlorides is subsequently recycled into the following dissolution operation or operations corresponding to stage a1.

3. Process according to any one of claims 1 or 2, characterised in that the super-pressure relative to atmospheric pressure common to the evaporator and the column is between 0.0005 and 0.15 MPa.

4. Process according to any one of claims 2 or 3, characterised in that the Stage b1 comprises intermediate storage of the solution in a storage tank allowing the continuous supply of the remainder of the device and of the column, and in that the recycling of the solvent involves the intermediate storage thereof in a buffer tank from which it is taken for the following dissolution operation or operations.

5. Process according to any one of claims 1 to 4, characterised in that the solvent is potassium chloroaluminate ($KAlCl_4$).

6. Process according to claim 5, characterised in that the dissolution temperature $\theta_1$ is between 280 and 350°C, and in that the reheating temperature for sublimation $\theta_2$ is between 430 and 550°C.

7. Process according to claim 6, characterised in that the concentration of dissolved hafnium-containing zirconium tetrachloride is from 25 to 55 g per 100 of solvent.

8. Device for introducing zirconium chloride, hafnium chloride and mixtures thereof into a column for continuous extractive distillation under pressure, characterised in that it comprises at least:

a2) a hot dissolver (1) provided with supply means: for chlorides (2), for liquid solvent (2), optionally for recycled solvent (3);

b2) means for recirculation under pressure (5) of the hot solution obtained and for control of its flow rate (5, 8);

c2) an evaporator (6) equipped with a supply of solution which is recirculated by the means (5), the evaporator (6) being connected to the column (7) by a nozzle and being equipped with an outlet for the impoverished solution;

d2) a means (10) connected to this outlet for preventing the pressure drop in the reheating apparatus (6) and the column (7) located downstream.

9. Device according to claim 8, characterised in that the means (10) belongs to the group constituted by graduated valves and hydraulic barriers.

FIG. 1